# EUROPÄISCHE PATENTANMELDUNG

(11) **EP 1 902 918 A2**
(43) Veröffentlichungstag der Anmeldung: **26.03.2008**
(21) Anmeldenummer: 07113975.2
(22) Anmeldetag: 08.08.2007
(51) Int. Cl.: B60T 13/66, B60T 13/58

(54) **Verfahren und Einrichtung zum Bremsen eines Schienenfahrzeuges**

(30) Priorität: 19.09.2006 DE 102006043892
(71) Anmelder: SIEMENS AKTIENGESELLSCHAFT, 80333 München (DE)
(72) Erfinder: Jacobi von Wangelin, Frank, 91058, Erlangen (DE); Löwenstein, Lars, Dr., 91093, Heßdorf (DE)

(57) **Zusammenfassung**

Die Erfindung betrifft ein Verfahren und eine Einrichtung zum Bremsen eines Schienenfahrzeuges, das mit einer ersten, elektrodynamischen Bremse und mit einer zweiten Bremse, insbesondere einer Reibungsbremse, ausgestattet ist. Es ist vorgesehen, dass bei einer Not- oder Schnellbremsung wie auch bei einer normalen Betriebsbremsung die erste, elektrodynamische Bremse verwendet wird. Mit einer geeigneten Vorrichtung wird die Verzögerung des Schienenfahrzeuges während des Bremsvorganges überwacht. Nur wenn die Sollverzögerung nicht erreicht wird, wird durch eine Auswerte- und Steuereinheit die zweite Bremse aktiviert.

## Beschreibung

Die Erfindung betrifft ein Verfahren und eine Einrichtung zum Bremsen eines Schienenfahrzeuges, das mit einer ersten, elektrodynamischen Bremse und mit einer zweiten Bremse, insbesondere einer Reibungsbremse, ausgestattet ist.

Beim Einsatz der elektrodynamischen Bremse arbeiten die Fahrmotoren des Schienenfahrzeuges im generatorischen Betrieb und speisen den erzeugten elektrischen Strom entweder in das Versorgungsnetz zurück oder führen ihn einem Bremswiderstand zu. Eine solche elektrodynamische Bremse arbeitet verschleißfrei. Die zweite Bremse eines Schienenfahrzeuges ist üblicherweise eine Reibungsbremse, die dem Verschleiß unterliegt und daher einen erheblichen Wartungs- und Instandhaltungsaufwand erfordert. Außerdem verursacht sie Geräusche und erzeugt Bremsstaub. Darüber hinaus ist bei einer pneumatischen Reibungsbremse eine aufwändige Druckluftleitung notwendig, sowie ein Bremssteuergerät, das mit dem Antriebssteuergerät verknüpft werden muss.

Bisher ist es üblich, die elektrodynamische Bremse nur für übliche, normale Betriebsbremsungen, die zum Reduzieren der Geschwindigkeit und zum Anhalten in einem Bahnhof notwendig werden, einzusetzen. Eine Not- oder Schnellbremsung erfolgt stets durch eine Reibungsbremse. Der Auslöser für eine Notbremsung ist beispielsweise der Totmanntaster im Führerstand oder die Fahrgastnotbremse. Auch eine besondere Vorrichtung zum Auslösen einer Schnellbremsung durch den Fahrzeugführer wirkt stets auf die Reibungsbremse.

Not- oder Schnellbremsungen kommen relativ häufig vor, so dass infolge der dadurch bedingten erhöhten Beanspruchung der Reibungsbremse deren Verschleiß groß ist, was eine häufige Wartung erfordert.

Der Erfindung liegt die Aufgabe zugrunde, ein Verfahren und eine Einrichtung zum Bremsen eines Schienenfahrzeuges anzugeben, bei dem selbst bei häufigen Not- oder Schnellbremsungen der Wartungsaufwand für die Bremsen gering ist und darüber hinaus Geräusche und Bremsstaub beim Abbremsen des Schienenfahrzeuges vermindert sind.

Die Aufgabe, ein geeignetes Verfahren anzugeben, wird gemäß der Erfindung dadurch gelöst, dass bei einer Not- oder Schnellbremsung wie auch bei einer normalen Betriebsbremsung die erste, elektrodynamische Bremse verwendet wird, dass die Verzögerung des Schienenfahrzeuges während des Bremsvorganges überwacht wird und dass nur, wenn die Sollverzögerung nicht erreicht wird, die zweite Bremse verwendet wird.

Die Aufgabe, eine geeignete Einrichtung anzugeben, wird gemäß der Erfindung dadurch gelöst, dass Vorrichtungen zum Auslösen einer Not- oder Schnellbremsung wie auch Vorrichtungen zum Auslösen einer normalen Betriebsbremsung mit der ersten, elektrodynamischen Bremse verbunden sind, dass das Schienenfahrzeug mit einer Vorrichtung zum Messen der Verzögerung des Schienenfahrzeuges ausgestattet ist und dass eine Auswerte- und Steuereinheit eingangsseitig mit den Vorrichtungen zum Auslösen einer Not- oder Schnellbremsung und mit der Vorrichtung zum Messen der Verzögerung und ausgangsseitig mit der zweiten Bremse verbunden ist.

Sowohl mit dem Verfahren als auch mit der Einrichtung nach der Erfindung wird der Vorteil erzielt, dass die meisten Not- oder Schnellbremsungen statt mit einer Reibungsbremse mit der elektrodynamischen Bremse durchgeführt werden. Das sichere und schnelle Abbremsen des Schienenfahrzeuges wird dabei gewährleistet, da die Verzögerung des Schienenfahrzeuges während des Bremsvorganges ständig überwacht wird und da für den Fall, dass die erreichte Verzögerung der gewünschten Sollverzögerung nicht entspricht, dann die zweite Bremse aktiviert wird. Sollte also in bestimmten Fällen die elektrodynamische Bremse nicht ausreichen, wird automatisch die zweite Bremse, die in der Regel eine Reibungsbremse ist, aktiviert.

Dadurch, dass nicht die Funktionsbereitschaft der Bremse, sondern die Verzögerung des Schienenfahrzeuges überwacht wird, wird ein sicheres Anhalten unabhängig von den Eigenschaften des Fahrweges gewährleistet. Zum Beispiel werden die Einflüsse einer Gefällstrecke bei der Verzögerungsmessung stets berücksichtigt.

Es wird der Vorteil erzielt, dass eine Reibungsbremse nur in seltenen Fällen benötigt wird, so dass deren Verschleiß gering bleibt und die Wartung minimiert werden kann. Auch entstehen weniger Geräusche und Bremsstäube.

Ein besonderer Vorteil ergibt sich dadurch, dass die zweite Bremse technisch einfacher als bisher ausgeführt werden kann, da sie weniger beansprucht wird. Statt einer Reibungsbremse kann beispielsweise eine Magnetschienenbremse oder eine Wirbelstrombremse verwendet werden.

Eine geeignete Vorrichtung zum Messen der Verzögerung des Schienenfahrzeuges sieht einen Beschleunigungsaufnehmer vor, der z. B. einen Piezokristall und eine seismische Masse aufweist. Die Auslenkung der seismischen Masse wird nur in Längsrichtung des Schienenfahrzeuges zugelassen, damit seitliche Beschleunigungen durch Kurvenfahrten nicht berücksichtigt werden. Vorrichtungen zur Messung der Verzögerung sind aus der EP 1 129 888 A2 oder aus der DE 195 10 755 C2 bekannt.

Zur weiteren Steigerung der Zuverlässigkeit des Bremsvorganges kann die Auswerte- und Steuereinheit auf ihre Funktionsfähigkeit hin überwacht werden, um bei einem möglicherweise erkannten Fehler sofort reagieren zu können. Beispielsweise könnte dann sofort die zweite Bremse aktiviert werden.

Mit dem Verfahren und der Einrichtung zum Bremsen eines Schienenfahrzeuges nach der Erfindung wird insbesondere der Vorteil erzielt, dass weniger Wartungs- und Instandhaltungskosten für das Schienenfahrzeug anfallen und dass darüber hinaus ein Abbremsen weniger Geräusche und weniger Bremsstäube als bisher erzeugt.

## Patentansprüche

1. Verfahren zum Bremsen eines Schienenfahrzeuges, das mit einer ersten, elektrodynamischen Bremse und mit einer zweiten Bremse, insbesondere einer Reibungsbremse, ausgestattet ist, **dadurch gekennzeichnet, dass** bei einer Not- oder Schnellbremsung wie auch bei einer normalen Betriebsbremsung die erste, elektrodynamische Bremse verwendet wird, dass die Verzögerung des Schienenfahrzeuges während des Bremsvorganges überwacht wird und dass nur, wenn die Sollverzögerung nicht erreicht wird, die zweite Bremse verwendet wird.

2. Einrichtung zum Bremsen eines Schienenfahrzeuges, das mit einer ersten, elektrodynamischen Bremse und mit einer zweiten Bremse, insbesondere einer Reibungsbremse, ausgestattet ist, **dadurch gekennzeichnet, dass** Vorrichtungen zum Auslösen einer Not- oder Schnellbremsung wie auch Vorrichtungen zum Auslösen einer normalen Betriebsbremsung mit der ersten, elektrodynamischen Bremse verbunden sind, dass das Schienenfahrzeug mit einer Vorrichtung zum Messen der Verzögerung des Schienenfahrzeuges ausgestattet ist und dass eine Auswerte- und Steuereinheit eingangsseitig mit den Vorrichtungen zum Auslösen einer Not- oder Schnellbremsung und mit der Vorrichtung zum Messen der Verzögerung und ausgangsseitig mit der zweiten Bremse verbunden ist.
